(19) Europäisches Patentamt
European Patent Office
Office européen des brevets

(11) EP 2 804 884 B1

(12) EUROPÄISCHE PATENTSCHRIFT

(45) Veröffentlichungstag und Bekanntmachung des Hinweises auf die Patenterteilung:
30.12.2015 Patentblatt 2015/53

(21) Anmeldenummer: 13701396.7

(22) Anmeldetag: 15.01.2013

(51) Int Cl.:
C08G 18/10 (2006.01)      C08G 18/12 (2006.01)
C08G 18/30 (2006.01)

(86) Internationale Anmeldenummer:
PCT/EP2013/050615

(87) Internationale Veröffentlichungsnummer:
WO 2013/107717 (25.07.2013 Gazette 2013/30)

(54) **NIEDRIGDICHTE POLYURETHANSCHUHSOHLEN ODER SOHLENTEILE MIT HOHEN RÜCKPRALLELASTIZITÄTEN UND NIEDRIGEM DRUCKVERFORMUNGSREST**

LOW-DENSITY POLYURETHANE SHOE SOLES OR SOLE PARTS WITH HIGH REBOUND AND LOW COMPRESSION SET.

SEMELLES OU PARTIES DE SEMELLES DE CHAUSSURES DE FAIBLE DENSITÉ AVEC ÉLASTICITÉ DE REBOND ÉLÉVÉE ET FAIBLE DEFORMATION RÉSIDUELLE À LA COMPRESSION.

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 18.01.2012 EP 12151570

(43) Veröffentlichungstag der Anmeldung:
26.11.2014 Patentblatt 2014/48

(73) Patentinhaber: BASF SE
67056 Ludwigshafen (DE)

(72) Erfinder:
• BOLLMANN, Heinrich
49594 Alfhausen (DE)
• KAMM, Andre
49163 Bohmte (DE)
• HUPRIKAR, Anand G.
Novi, MI 48375 (US)
• HOLWITT, Ulrich
Shangai Pudong 200135 (HK)

(56) Entgegenhaltungen:
WO-A1-2005/116101      US-A1- 2005 101 682

EP 2 804 884 B1

**Beschreibung**

Die vorliegende Erfindung betrifft ein Verfahren zur Herstellung von Polyurethanschuhsohlen mit einer Formteildichte von 100 bis 350 g/L, bei dem man (a) organische Polyisocyanate, (b) Polyole, (c) Treibmittel, enthaltend Wasser, und gegebenenfalls (d) Kettenverlängerungsmittel und/oder Vernetzungsmittel, (e) Katalysatoren und (f) sonstigen Hilfsmittel und/oder Zusatzstoffe einsetzt, wobei man in einem ersten Schritt Polyisocyanat (a), Polyol (b) und gegebenenfalls Kettenverlängerungs- und/oder Vernetzungsmittel (d) mischt und bei einer Temperatur von 110 °C bis 180 °C zu einem Polyisocyanatgruppen aufweisenden Prepolymer umsetzt, und in einem zweiten Schritt das erhaltene isocyanatterminierte Prepolymer und gegebenenfalls verbleibendem Polyisocyanat (a) mit gegebenenfalls verbleibendem Polyol (b), Treibmittel, enthaltend Wasser (c) und gegebenenfalls verbleibendem Kettenverlängerungsmitteln und/oder Vernetzungsmittel (d) sowie gegebenenfalls vorhandenen Katalysatoren (e) und sonstigen Hilfsmitteln und/oder Zusatzstoffen (f) vermischt, in eine Form gibt und zu einer Polyurethanschuhsohle ausreagieren lässt. Weiter betrifft die vorliegende Erfindung eine Polyurethanschuhsohle, bei dem man (a) organische Polyisocyanate, (b) Polyole, (c) Treibmittel, enthaltend Wasser, und gegebenenfalls (d) Kettenverlängerungsmittel und/oder Vernetzungsmittel, (e) Katalysatoren und (f) sonstigen Hilfsmittel und/oder Zusatzstoffe einsetzt, wobei man in einem ersten Schritt Polyisocyanat (a), Polyol (b) und gegebenenfalls Kettenverlängerungs- und/oder Vernetzungsmittel (d) mischt und bei einer Temperatur von 110 °C bis 180 °C zu einem Polyisocyanatgruppen aufweisenden Prepolymer umsetzt, und in einem zweiten Schritt das erhaltene isocyanatterminierte Prepolymer und gegebenenfalls verbleibendem Polyisocyanat (a) mit gegebenenfalls verbleibendem Polyol (b), Treibmittel, enthaltend Wasser (c) und gegebenenfalls verbleibendem Kettenverlängerungsmitteln und/oder Vernetzungsmittel (d) sowie gegebenenfalls vorhandenen Katalysatoren (e) und sonstigen Hilfsmitteln und/oder Zusatzstoffen (f) vermischt, zu einem Polyurethanschaumstoff mit einer Dichte von 100 bis 350 g/L ausreagieren lässt und aus dem Polyurethanschaumstoff eine Polyurethanschuhsohle formt. Das Formen des Polyurethanschaumstoffs erfolgt dabei beispielsweise durch Schneiden, Stanzen, Schälen und/oder Thermoformen, gegebenenfalls zusammen mit weiteren Materialien, wie weiteren Polyurethanschaumstoffen oder Ethylenvinylacetat.

Weiter betrifft die vorliegende Erfindung eine Polyurethanschuhsohle, die erhältlich ist nach einem erfindungsgemäßen Verfahren.

Innerhalb der letzten Jahre ist ein Trend zu leichteren Schuhsohlen festzustellen. Besonders im Sportschuhbereich ist eine niedrige Dichte eine wesentliche Anforderung an das Sohlenmaterial. Daher werden im Allgemeinen in diesem Bereich Zwischensohlen aus geschäumten Poly(ethylen-co-vinylacetat) (EVA) verwendet. Mit diesen Materialien können niedrige Dichte von etwa 150 bis 250 g/L realisiert werden. Ferner zeichnen sich neue Zwischensohlen aus EVA durch hohe Rückprallelastizitäten aus. Nachteil der Zwischensohlen aus EVA ist, dass diese einen schlechten Druckverformungsrest aufweisen. Polyurethan zeigt im Vergleich zu EVA einen deutlich besseren Druckverformungsrest auch bei niedrigen Dichten. Dies ist dem Fachmann bekannt und wird auch in der Literatur wie z.B. bei Brückner et. al. Kunststoffe 9/2010 beschrieben.

Die Reduktion der Dichte bei Polyurethanschuhsohlen, insbesondere bei Formteildichten von kleiner als 300 g/L, führt allerdings zu Problemen bei der Herstellung der Formkörper. So tritt häufig eine irreguläre Zellmorphologie auf, wodurch die Formkörper uneinheitliche mechanische Eigenschaften aufweisen. Auch bei optimal geformten Polyurethanschaumstoffformkörpern mit Dichten kleiner als 300 g/L nehmen die mechanischen Eigenschaften herkömmlicher Polyurethanschuhsohlen, insbesondere die Rückprallelastizität, so stark ab, dass diese als Schuhsohlen nur noch eingeschränkt eingesetzt werden können.

Zur Verbesserung der mechanischen Eigenschaften und der Härte können beispielsweise gefüllte Polyole, sogenannte Polymerpolyole eingesetzt werden. So offenbart beispielsweise EP 1756187 eine Polyurethanschuhsohle mit einer Dichte von 120 bis 300 g/L, die erhalten wird durch Umsetzung von Polyisocyanaten mit Polyesterolen und Polymerpolyesterolen. Polymerpolyole sind aber nur durch ein recht aufwändiges Verfahren herstellbar und damit recht teuer. Weiter ist auch deren Verarbeitung nicht problemlos, da diese eine hohe Viskosität aufweisen und dies häufig zu einer ungenügenden Mischung mit der Isocyanatkomponente sowie zu einer ungenügenden Formfüllung führt.

Es ist dem Fachmann bekannt, dass durch den Einsatz spezieller Polyole wie z.B. Polytetrahydrofuran Formkörper mit guten Druckverformungsresten und hohen Elastizitäten hergestellt werden können. EP 1 042 384 beschreibt beispielsweise solche Formkörper für den Einsatz als Schuhsohlen. Nachteil solcher Systeme ist, dass diese speziellen Polyole extrem teuer sind und ein niedrigeres mechanisches Niveau im Vergleich zu Polyurethanen auf Basis von Polyesterolen haben.

EP 1 225 199 offenbart ein Verfahren, welches für die Herstellung von niedrigdichten Polyurethanformkörpern mit relativ hohen Elastizitäten genutzt werden kann. Dabei nutzt EP 1 225 199 spezielle DMC-Polyetherpolyole mit Ethylenoxid-Endcap. Der Nachteil dieser Polyole ist, dass DMC-Polyole mit einem EO-Endcap über einen aufwendigen Hybridprozess hergestellt werden. Ferner nutzt EP 1 225 199 ein spezielles Verfahren zur Herstellung der Polyurethanformkörper. Dabei muss in diesem Verfahren Kohlendioxid in die Komponenten dispergiert/gelöst werden. Dies ist nur mit einem besonderen apparativen Aufwand möglich.

Das Dokument US 2005/0101682 A1 offenbart niederdichte Polyurethanschaumstoffe und deren Verwendung in Schuhsohlen. Die Dichte dieser Schäume liegt im Bereich von 120 bis weniger als 300 g/L. Die Beispiele 1-2 von US 2005/0101682 A1 beschreiben die Herstellung der Schuhsohle: Die A-Komponente (Polyol, Kettenverlängerer, Aminkatalysator, Wasser, Vernetzer und Stabilisator) werden mit der B-Komponente (Isocyanat-Prepolymer, NCO-Gehalt 22 bzw. 23%) zur Reaktion gebracht.

Aufgabe der vorliegenden Erfindung war es daher, eine Polyurethanschuhsohle mit einer Dichte von 100 bis 350 g/L zu liefern, die einfach herstellbar ist und hervorragende mechanische Eigenschaften, insbesondere eine hohe Rückprallelastizität und niedrigen Druckverformungsrest, aufweist.

Die erfindungsgemäße Aufgabe wird gelöst durch ein Verfahren zur Herstellung einer Polyurethanschuhsohle mit einer Formteildichte von 100 bis 350 g/L, bei dem man (a) organische Polyisocyanate, (b) Polyole, (c) Treibmittel, enthaltend Wasser, und gegebenenfalls (d) Kettenverlängerungsmittel und/oder Vernetzungsmittel, (e) Katalysatoren und (f) sonstigen Hilfsmittel und/oder Zusatzstoffe einsetzt, wobei man in einem ersten Schritt Polyisocyanat (a), Polyol (b) und gegebenenfalls Kettenverlängerungs- und/oder Vernetzungsmittel (d) mischt und bei einer Temperatur von 110 °C bis 180 °C zu einem Polyisocyanatgruppen aufweisenden Prepolymer umsetzt, und in einem zweiten Schritt das erhaltene isocyanatterminierte Prepolymer und gegebenenfalls verbleibendes Polyisocyanat (a) mit gegebenenfalls verbleibendem Polyol (b), Treibmittel, enthaltend Wasser (c) und gegebenenfalls verbleibendem Kettenverlängerungsmitteln und/oder Vernetzungsmittel (d) sowie gegebenenfalls vorhandenen Katalysatoren (e) und sonstigen Hilfsmitteln und/oder Zusatzstoffen (f) vermischt, in eine Form gibt und zu einer Polyurethanschuhsohle ausreagieren lässt.

Weiter betrifft die vorliegende Erfindung Polyurethanschuhsohlen mit einer Dichte von 100 bis 350 g/L, bei dem man (a) organische Polyisocyanate, (b) Polyole, (c) Treibmittel, enthaltend Wasser, und gegebenenfalls (d) Kettenverlängerungsmittel und/oder Vernetzungsmittel, (e) Katalysatoren und (f) sonstigen Hilfsmittel und/oder Zusatzstoffe einsetzt, wobei man in einem ersten Schritt Polyisocyanat (a), Polyol (b) und gegebenenfalls Kettenverlängerungs- und/oder Vernetzungsmittel (d) mischt und bei einer Temperatur von 110 °C bis 180 °C zu einem Polyisocyanatgruppen aufweisenden Prepolymer umsetzt, und in einem zweiten Schritt das erhaltene isocyanatterminierte Prepolymer und gegebenenfalls verbleibendes Polyisocyanat (a) mit gegebenenfalls verbleibendem Polyol (b), Treibmittel, enthaltend Wasser (c) und gegebenenfalls verbleibendem Kettenverlängerungsmitteln und/oder Vernetzungsmittel (d) sowie gegebenenfalls vorhandenen Katalysatoren (e) und sonstigen Hilfsmitteln und/oder Zusatzstoffen (f) vermischt, zu einem Polyurethanschaumstoff mit einer Dichte von 100 bis 350 g/L ausreagieren lässt und aus dem Polyurethanschaumstoff eine Polyurethanschuhsohle formt. Das Formen des Polyurethanschaumstoffs erfolgt dabei beispielsweise durch Schneiden, Stanzen, Schälen und/oder Thermoformen. Gegebenenfalls können beim Formen der Polyurethanschuhsohle weitere Materialien, wie weiteren Polyurethanschaumstoffe oder Ethylenvinylacetat eingesetzt werden.

Weiter betrifft die vorliegende Erfindung eine Polyurethanschuhsohle, die erhältlich ist nach einem erfindungsgemäßen Verfahren.

Polyurethanschuhsohlen im erfindungsgemäßen Sinn umfassen dabei einteilige Schuhsohlen, sogenannte Kombisohlen, Zwischensohlen, Einlegesohlen oder Schuhsohlenteile, wie Fersenteile oder Ballenteile. Unter Einlegesohlen werden Einlegeteile für den Vorfuß, Einlegeteile über den gesamten Fuß oder Fußbetten verstanden. Weiter umfassen Schuhsohlen im erfindungsgemäßen Sinn Polyurethanhybridschuhsohlen, die neben dem erfindungsgemäßen Polyurethan weitere Materialien, wie weitere Polyurethane und/oder Ethylenvinylacetat, enthalten.

Die erfindungsgemäßen Polyurethanschuhsohlen weisen eine Härte auf von 15 bis 75 Asker C, besonders bevorzugt zwischen 25 und 65 Asker C, gemessen nach JIS K 7312. Weiterhin weisen die erfindungsgemäßen Schuhsohlen bevorzugt Zugfestigkeiten von über 0,5 N/mm$^2$, besonders bevorzugt von über 0,8 N/mm$^2$ und insbesondere von über 1,0 N/mm$^2$, gemessen nach DIN 53504, auf. Ferner weisen die erfindungsgemäßen Schuhsohlen bevorzugt eine Dehnung von über 100%, besonders bevorzugt von über 150% und insbesondere von über 200%, gemessen nach DIN 53504, auf. Ferner weisen die erfindungsgemäßen Schuhsohlen bevorzugt eine Rückprallelastizität nach DIN 53 512 von 20 bis 70 %, besonders bevorzugt 30 bis 60 % und insbesondere 40 bis 60 % auf. Zudem weisen die erfindungsgemäßen Schuhsohlen bevorzugt eine Weiterreißfestigkeit von über 1 N/mm, bevorzugt von über 1,5 N/mm, gemessen nach ASTM D3574, auf. Daneben weisen die erfindungsgemäßen Polyurethanschuhsohlen bevorzugt einen Druckverformungsrest, gemessen in Anlehnung an DIN EN ISO 1856 (Ein zylindrischer Prüfkörper mit Ø 16 mm und der Ausgangshöhe $h_0$ = 10 mm wird auf die Höhe $h_1$ = 5,0 mm komprimiert und für 6 h bei 50 °C gelagert. Nach dem Entspannen des Prüfkörpers und Lagerung bei Normklima 23/50 wird nach 30 min die Höhe $h_2$ des Prüfkörpers bestimmt und der Druckverformungsrest gemäß folgender Formel berechnet: Druckverformungsrest = $((h_0 - h_2) / (h_0 - h_1)) * 100\%$) von unter 20%, besonders bevorzugt von unter 15%, insbesondere von unter 12% auf.

Schließlich verfügen die erfindungsgemäßen Polyurethanschuhsohlen über eine Steifigkeit, die sich wie folgt ermitteln lässt: Ein Prüfkörper mit den Abmessungen X x Y x Z = 40 mm x 40 mm x 10 mm, wie er auch für die Bestimmung der Rückprallelastizität verwendet wird, wird vor Prüfungsbeginn für 4 Stunden bei 80 °C und dann für mindestens 24 Stunden und maximal 120 Stunden bei (23 ± 2) °C und (50 ± 5)% relativer Luftfeuchtigkeit gelagert. Die Prüfung findet unter diesen gleichen klimatischen Bedingungen statt. Der Prüfkörper wird in Z-Richtung zwischen zwei planparallele Platten gelegt. Die Platten fahren mit 0,1 mm/s in Z-Richtung aufeinander zu, wobei ein Wegnullpunkt bei einer Kompressionskraft von 2 N gesetzt wird. Es folgen zwei Setzzyklen, wobei die Platten von diesem Wegnullpunkt aus den Prüfkörper zweimal mit einer Verfahrgeschwindigkeit von 0,1 mm/s bis zu einer Einfederung von 5 mm komprimieren und wieder zum Wegnullpunkt zurückkehren. Nach einer Wartezeit von 30 s wird ein neuer Wegnullpunkt bei einer Vorkraft von 2 N und mit einer Verfahrgeschwindigkeit von 0,1 mm/s angefahren. Anschließend folgt der Messzyklus. Dabei wird erneut mit einer Verfahrgeschwindigkeit von 0,1 mm/s bis zu einer Einfederung von 5 mm komprimiert und auf den neuen Wegnullpunkt zurück entspannt, wobei die Kraft über den Einfederungs- und Ausfederungsverlauf aufgezeichnet wird. Dabei ermittelt man die Steifigkeit c als Sekantenmodul im Einfederungsverlauf zwischen einem Kraftwert von 20 N und einem Kraftwert von 80 N entsprechend folgender Formel:

$$c = \frac{80N - 20N}{z_{80N} - z_{20N}}$$

Ebenfalls ermittelt man die Kompressionsarbeit Ws, auch Speicherarbeit genannt, als das Integral der Kraft über den Weg zwischen der Einfederung von 0 mm und 5 mm während des Messzyklus:

$$Ws = \int_{z=0mm}^{z=5mm} F(z)dz \qquad \text{während der Kompression}$$

Gleichartig wird die Entspannungsarbeit We, die der Prüfkörper während der Entlastung im Messzyklus leistet, als das Integral der Kraft über den Weg zwischen der Einfederung von 0 mm und 5 mm ermittelt.

$$We = \int_{z=0mm}^{z=5mm} F(z)dz \qquad \text{während der Entspannung}$$

Die Differenz zwischen Kompressionsarbeit und Entspannungsarbeit wird als Verlustarbeit Wv bezeichnet: Wv = Ws - We. Die Dämpfung D berechnet sich entsprechend

$$D = \frac{Wv}{Ws}$$

Bevorzugt liegt die Steifigkeit c der erfindungsgemäßen Polyurethanschuhsohlen unter 1000 N/mm, besonders bevorzugt zwischen 30 und 300 N/mm. Bevorzugt liegt die Speicherarbeit Ws der erfindungsgemäßen Polyurethanschuhsohlen unter 5 Nm, besonders bevorzugt zwischen 0,1 und 2,5 Nm, ganz besonders bevorzugt zwischen 0,1 und 1 Nm. Bevorzugt liegt die Dämpfung der erfindungsgemäßen Polyurethanschuhsohlen unter 50%, besonders bevorzugt unter 40% und ganz besonders bevorzugt unter 30%.

Insbesondere handelt es sich bei den erfindungsgemäßen Polyurethanschuhsohlen um Außensohlen, Zwischensohlen, oder Sohlenteile, wie Fersenteile, Ballenteile, Einlegeteile für den Vorfuß, Einlegeteile über den gesamten Fuß oder Fußbetten.

Die erfindungsgemäßen Polyurethanschuhsohlen weisen ein Dichte von 100 bis 350 g/L, vorzugsweise 120 bis 280 g/L und besonders bevorzugt 130 bis weniger als 250 g/L und insbesondere 150 bis 220 g/L auf. Unter Dichte der Polyurethanschuhsohle ist hierbei die gemittelte Dichte über den gesamten Schaumstoff zu verstehen, d.h. bei Integralschaumstoffen bezieht sich diese Angabe auf die mittlere Dichte des gesamten Schaumstoffs inklusive Kern und Außenschicht. Weitere Materialien neben dem erfindungsgemäßen Polyurethan, beispielsweise bei Hybridschuhsohlen, werden nicht zur Ermittlung der Dichte herangezogen.

Die zur Herstellung der erfindungsgemäßen Polyurethanschuhsohlen verwendeten organischen Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind monomeres Methandiphenyldiisocyanat (MMDI), wie 4,4'-Methandiphenyldiisocyanat, 2,4'-Methandiphenyldiisocyanat, die Mischungen aus monomeren Methandiphenyldiisocyanaten und höherkernigen Homologen des Methandiphenyldiisocyanats (Polymer-MDI), Naphthalindiisocyanat (NDI), insbesondere 1,5-Naphthalindiisocyanat, 3,3'-Dimethyl-4,4'-diisocyanatobiphenyl (TODI), p-Phenylendiisocyanat (PPDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird NDI, Mischungen aus NDI und MDI oder besonders bevorzugt 4,4'-MDI verwendet. Das besonders bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-%, bezogen auf das Gesamtgewicht des eingesetzten Isocyanats (a), nicht überschreiten.

Die Polyisocyanatkomponente (a) wird zumindest teilweise in einem ersten Schritt mit Polyolen (b) und gegebenenfalls Ketteverlängerungsmitteln und/oder Vernetzungsmitteln (d) vermischt und bei 110 bis 180 °C, vorzugsweise bei 130 bis 170 °C und besonders bevorzugt 140 bis 155 °C zu einem Isocyanatgruppen aufweisenden Prepolymeren umgesetzt.

Dabei weist das so erhaltene isocyanatterminierte Prepolymer gemäß der Erfindung vorzugsweise einen NCO-Gehalt von 2 bis 20 Gew.-%, besonders bevorzugt 2 bis 10 Gew.-% und insbesondere 4 bis 8 Gew.-% auf.

Vorzugsweise wird zur Herstellung des isocyanatterminierten Prepolymers mindestens 50 Gew.-%, besonders bevorzugt mindestens 80 Gew.-%, noch mehr bevorzugt mindestens 90 Gew.-% und insbesondere 100 Gew.-% des Polyols (b) eingesetzt.

Weiter wird zur Herstellung des isocyanatterminierten Prepolymers mindestens 50 Gew.-%, besonders bevorzugt mindestens 80 Gew.-%, noch mehr bevorzugt mindestens 90 Gew.-% und insbesondere 100 Gew.-% des Isocyanats (a) eingesetzt.

Verbleibendes Isocyanat (a) und verbleibendes Polyol (b) kann dann unverändert und/oder in Form von konventionellen Prepolymeren zur Herstellung der erfindungsgemäßen Polyurethanschuhsohlen eingesetzt werden. Konventionelle Prepolymere werden erhalten, indem vorstehend beschriebene Polyisocyanate (a-1), beispielsweise bei Temperaturen von 30 bis 100 °C, bevorzugt bei etwa 80 °C, mit Polyolen (b) und gegebenenfalls Ketteverlängerungsmitteln und/oder Vernetzungsmitteln (d) zum konventionellen Prepolymer umgesetzt werden.

Als Polyole b) können beispielsweise Polyetherole oder Polyesterole mit mindestens zwei gegen Isocyanatgruppen reaktiven Wasserstoffatomen eingesetzt werden. Vorzugsweise weisen Polyole b) ein zahlenmittleres Molekulargewicht von größer 450 g/mol, besonders bevorzugt von größer 500 bis kleiner 12.000 g/mol und insbesondere von 600 bis 8.000 g/mol auf.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise 1,3-Propylenoxid, 1,2- bzw. 2,3-Butylenoxid und vorzugsweise Ethylenoxid und 1,2-Propylenoxid. Des Weiteren kann monomeres Tetrahydrofuran eingesetzt werden. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden reines 1,2-Propylenoxid oder Mischungen aus 1,2-Propylenoxid und Ethylenoxid, wobei das Ethylenoxid in Mengen von über 0 bis 50 % als Ethylenoxid-Endblock eingesetzt wird ("EO-cap"), so dass die entstehenden Polyole zu über 70 % primäre OH-Endgruppen aufweisen.

Als Startermolekül kommen vorzugsweise Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylenpolyole oder Polyoxypropylen-polyoxyethylen-polyole, besitzen vorzugsweise eine mittlere Funktionalität von 1,7 bis 3 und zahlenmittlere Molekulargewichte von 1.000 bis 12.000, vorzugsweise von 1.200 bis 8.000 g/mol, insbesondere von 1.500 bis 6.000 g/mol, noch speziell bevorzugt von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Pimelinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 2-Methyl-1,3-propandiol, 1,4-Butandiol, 2-Methyl-1,4-butandiol, 1,5-Pentandiol, 3-Methyl-1,5-pentandiol, 1,6-Hexandiol, 1,10-Decandiol, Glycerin und Trimethylolpropan. Vorzugsweise verwendet werden Ethandiol, Diethylenglykol, 2-Methyl-1,3-propandiol, 1,4-Butandiol, 1,5-Pentandiol und 1,6-Hexandiol. Die Diole können dabei sowohl einzeln als auch im Gemisch untereinander verwendet werden. Vorzugsweise verwendet wird ein Gemisch aus Ethandiol und 1,4-Butandiol. Eingesetzt werden können ferner Polyesterpolyole aus Lactonen, z.B. ε-caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium oder Argon in der Schmelze bei Temperaturen von 150 bis 250 °C, vorzugsweise 180 bis 220 °C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die erhaltenen Polyesterpolyole besitzen vorzugsweise eine Funktionalität von 1,9 bis 4, besonders bevorzugt von 1,9 bis 3, mehr bevorzugt von 1,9 bis 2,2 und insbesondere von 2,0 bis 2,1, und ein zahlenmittleres Molekulargewicht von 480 bis 3000, vorzugsweise 1000 bis 3000 g/mol, besonders bevorzugt 1500 bis 2500 g/mol. Insbesondere werden als Polyesterole solche eingesetzt, die ausschließlich durch Kondensation von Disäuren und Diolen erhalten werden.

Geeignete Polyole (b) sind ferner hydroxylgruppenhaltige Polyester der Kohlensäure mit den genannten mehrwertigen Alkoholen, insbesondere solchen mit 4 bis 8 Kohlenstoffatomen, wie Butandiol-1,4, Pentandiol-1,5, Hexandiol-1,6, Cyclohexan-1,4-dimethanol, Neopentylglykol, 2-Methyl-1,3-propandiol, 2-Methyl-1,4-butandiol, 2-Butyl-2-ethyl-1,3-propandiol, Kondensationsprodukte von Hydroxycarbonsäuren, beispielsweise ω-Hydroxycapronsäure und vorzugsweise Polymerisationsprodukten von Lactonen, beispielsweise gegebenenfalls substituierten ε-Caprolactonen. Bevorzugte Polycarbonatpolyole sind Polyhexamethylen-carbonatdiol, Polyhexamethylen-pentamethylen-carbonatdiol, Polyhexamethylen-tetramethylen-carbonatdiol und/oder der hydroxylgruppenhaltige Polyester der Kohlensäure mit Hexandiol-1,6 und Cyclohexan-1,4-dimethanol. Diese sind allgemein bekannt und kommerziell erhältlich.

Als Polyole eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyol enthält neben dem Pfropfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist Polymerpolyol enthalten, wird dies vorzugsweise zusammen mit weiteren Polyolen (b) eingesetzt, beispielsweise Polyetherolen, Polyesterolen oder Mischungen aus Polyetherolen und Polyesterolen. Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt ist der Anteil an Polymerpolyol kleiner als 20 Gew.-%, bezogen auf das Gesamtgewicht der Komponente (b). Insbesondere wird kein Polymerpolyol eingesetzt.

Vorzugsweise werden als Polyole (b) Mischungen, enthaltend Polyesterole, eingesetzt. Dabei beträgt der Anteil von Polyesterolen an den Polyolen (b) vorzugsweise mindestens 30 Gew.-%, besonders bevorzugt mindestens 70 Gew.-% und insbesondere wird als höhermolekulare Verbindung (b) ausschließlich Polyesterol eingesetzt, wobei ein Polymerpolyol auf Basis von Polyesterol bei dieser Berechnung wie ein Polyesterol behandelt wird.

Ferner sind bei der Herstellung von erfindungsgemäßen Polyurethanschuhsohlen Treibmittel c) zugegen. Diese Treibmittel c) können Wasser enthalten. Als Treibmittel c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. In einer bevorzugten Ausführungsform wird als Treibmittel eine Mischung enthaltend mindestens eines dieser Treibmittel und Wasser eingesetzt, besonders bevorzugt werden keine physikalischen Treibmittel und insbesondere Wasser als alleiniges Treibmittel eingesetzt.

Der Gehalt an Wasser beträgt in einer bevorzugten Ausführungsform von 0,1 bis 3 Gew.-%, bevorzugt 0,4 bis 2,0 Gew.-%, besonders bevorzugt 0,6 bis 1,5 Gew.-%, bezogen auf das Gesamtgewicht der Komponenten a) bis f).

In einer weiteren bevorzugten Ausführungsform werden der Umsetzung der Komponenten a) bis f) zusätzlich Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 $\mu$m auf. Beispiele für geeignete Mikrohohlkugeln sind unter dem Handelsnamen Expancell® der Firma Akzo Nobel erhältlich.

Die Mikrohohlkugeln werden im Allgemeinen in einer Menge von 0,5 bis 5 Gew.-%, bezogen auf das Gesamtgewicht der Komponenten b) und c) zugesetzt. In einer besonders bevorzugten Ausführungsform werden als Treibmittel eine Mischung aus Mikroholkugeln und Wasser eingesetzt, wobei keine weiteren physikalischen Treibmittel enthalten sind. Insbesondere wird als Wasser als alleiniges Treibmittel eingesetzt.

Als Kettenverlängerungsmittel und/oder Vernetzungsmittel (d) werden Substanzen mit einem Molekulargewicht von vorzugsweise kleiner 450 g/mol, besonders bevorzugt von 60 bis 400 g/mol eingesetzt, wobei Kettenverlängerer 2 gegenüber Isocyanaten reaktive Wasserstoffatome und Vernetzungsmittel mindestens 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol, Diethylenglykol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 0,01 bis 6 Gew.-%, vorzugsweise 0,01 bis 3 Gew.-% und insbesondere 0,01 bis 0,5 Gew.-%, bezogen auf das Gewicht der Komponenten (b) und (d), zum Einsatz. In einer besonders bevorzugten Ausführungsform wird kein diolisches Kettenverlängerungsmittel und kein Vernetzungsmittel zugesetzt.

Als Katalysatoren (e) zur Herstellung der erfindungsgemäßen Polyurethanschuhsohlen werden bevorzugt Verbindungen verwendet, welche die Reaktion der Polyole (b) und gegebenenfalls Kettenverlängerungs- und Vernetzungsmittel (d) sowie chemischem Treibmittel (c) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, N-Methyl-N'-(dimethylaminomethyl)-piperazin, N-Methyl-N'-(dimethylaminoethyl)-piperazin, N-Methylimidazol, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin oder Mischungen dieser Verbindungen. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,005 bis 1 Gew.-% Katalysator bzw.

Katalysatorkombination, bezogen auf das Gewicht der Komponente (b). Vorzugsweise werden die Katalysatoren aber so ausgewählt und in entsprechenden Mengen eingesetzt, dass das erfindungsgemäße Polyurethanprodukt, beispielsweise die erfindungsgemäße Polyurethanschuhsohle oder das erfindungsgemäße Polyurethan, nach maximal 60 Minuten, besonders bevorzugt nach 30 Minuten und insbesondere nach maximal 20 Minuten entformt werden kann. Dies gilt sinngemäß für nicht formfallendes Material, beispielsweise auf Endlosbändern hergestelltes Produkt. Dabei beziehen sich diese Zeitangaben auf die Zeitspanne, die zwischen Eintragen der Reaktionsmischung in die Form und defektfreier Entformbarkeit des Polyurethanprodukts liegt.

Der Reaktionsmischung zur Herstellung der erfindungsgemäßen Polyurethanschuhsohlen können gegebenenfalls auch noch Hilfsmittel und/oder Zusatzstoffe (f) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente b), eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Als organische Füllstoffe kommen beispielsweise in Betracht: Ruß, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (d), zugegeben werden. Vorzugsweise werden keine Füllstoffe eingesetzt.

Weiter ist Gegenstand der vorliegenden Erfindung ein Verfahren zur Herstellung von Polyurethanschuhsohlen mit einer Formteildichte von 100 bis 350 g/L, bei dem man das Prepolymer aus den Komponenten (a), (b) und ggf. (d) sowie gegebenenfalls weitere Isocyanate mit den isocyanatreaktiven Komponenten (c) und gegebenenfalls (b), (d), (e) und/oder (f) im zweiten Schritt in solchen Mengen umsetzt, dass in diesem Schritt das Äquivalenzverhältnis von NCO-Gruppen zur Summe der reaktiven Wasserstoffatome, 0,8 : 1 bis 1,5 : 1, vorzugsweise 1 : 1 bis 1,3 : 1 und insbesondere 1,02 : 1 bis 1,15 : 1 beträgt. Dabei entspricht ein Verhältnis von 1 : 1 einem Isocyanatindex von 100. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Die im zweiten Schritt zugegebenen isocyanatreaktiven Komponenten (c) und gegebenenfalls (b), (d), (e) und/oder (f) werden üblicherweise als "Härter" bezeichnet. Dabei betragen die Mischungsverhältnisse von isocyanatterminiertem Prepolymer zum Härter vorzugsweise 100 Gewichtsteile zu weniger als 10 Gewichtsteilen, besonders bevorzugt 100 Gewichtsteile zu weniger als 8 Gewichtsteilen. Dieses Verhältnis von isocyanatterminiertem Prepolymer zum Härter kann beispielsweise durch den Anteil der Polyole (b) und Kettenverlängerungsmittel und/oder Vernetzungsmittel (d) im Härter bzw. im isocyanatterminierten Prepolymer eingestellt werden.

Die erfindungsgemäßen Polyurethanschuhsohlen werden vorzugsweise nach dem two-shot-Verfahren mit Hilfe der Niederdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integraischaumstoff", Carl-Hanser-Verlag, München, Wien, 1975, oder im "Kunststoffhandbuch", Band 7, Polyurethane, 3. Auflage, 1993, Kapitel 7.

Das isocyanatterminierte Prepolymer und der Härter werden dazu vorzugsweise bei einer Temperatur von 15 bis 110 °C gemischt. Besonders bevorzugt wird das Prepolymer mit einer Temperatur von 60 - 100 °C und der Härter mit einer Temperatur von 20 - 60 °C miteinander vermischt. Anschließend wird die Reaktionsmischung, gegebenenfalls unter erhöhtem Druck, in das Formwerkzeug eingebracht. Die Vermischung kann mechanisch mittels eines Rührers oder einer Rührschnecke durchgeführt werden. Die Formwerkzeugtemperatur beträgt zweckmäßigerweise 20 bis 160 °C, vorzugsweise 40 bis 120 °C, besonders bevorzugt 70 bis 110 °C. Dabei wird im Rahmen der Erfindung die Mischung der isocyanatterminierten Prepolymere, der Treibmittel (c) und der gegebenenfalls enthaltenen Komponenten (b), (d), (e) und (f) bei Reaktionsumsätzen kleiner 90 %, bezogen auf die Isocyanatgruppen der Prepolymerkomponente, als Reaktionsmischung bezeichnet. Die Menge der in das Formwerkzeug eingebrachten Reaktionsmischung wird so bemessen, dass die Formteildichte der erfindungsgemäßen Polyurethanschuhsohle 100 bis 350 g/L, vorzugsweise 120 bis 280 g/L und besonders bevorzugt 130 bis weniger als 250 g/L und insbesondere 150 bis 220 g/L beträgt. Dabei wird die Menge des eingesetzten Systems so gewählt, dass ein Verdichtungsfaktor von vorzugsweise 1,1 bis 8, besonders bevorzugt 1,4 bis 5 und insbesondere 1,4 bis 3 erhalten wird.

Alternativ kann die Reaktionsmischung auch frei, beispielsweise in Wannen oder auf einem Band, zu Polyurethanschaumstoffen mit einer Dichte von 100 bis 350 g/L, vorzugsweise 120 bis 280 g/L und besonders bevorzugt 130 bis weniger als 250 g/L und insbesondere 150 bis 220 g/L verschäumt werden. Aus dem so erhaltenen Polyurethanschaumstoffblock können dann die Schuhsohlen oder Schuhsohlenteile, beispielsweise durch Schneiden, Stanzen, Schälen und/oder Thermoformen, gegebenenfalls zusammen mit weiteren Materialien, wie gegebenenfalls weiteren Polyurethanschaumstoffen oder Ethylenvinylacetat, geformt werden.

Die erfindungsgemäßen Polyurethanschuhsohlen werden vorzugsweise als Zwischensohle, zum Beispiel für Straßenschuhe, Sportschuhe, Sandalen und Stiefel, eingesetzt. Insbesondere werden die erfindungsgemäßen Polyurethanschuhsohlen als Zwischensohle für Sportschuhe eingesetzt. Weiter umfasst eine erfindungsgemäße Schuhsohle auch Schuhsohlenteile, beispielsweise Fersenteile oder Ballenteile. Auch können erfindungsgemäße Schuhsohlen als Einlegesohlen oder Kombisohlen eingesetzt werden.

Dabei führt ein erfindungsgemäßes Verfahren zu Polyurethanschuhsohlen mit hervorragenden mechanischen Eigenschaften. Insbesondere zeigen die erfindungsgemäßen Polyurethanschuhsohlen eine hohe Rückprallelastizität bei hohen Härten und geringen Dichten. Weiter ist vorteilhaft, dass, insbesondere bei Einsatz von Polyolen (b) mit einer maximalen Funktionalität von 2,2 und bei Verzicht auf Vernetzer die erhaltenen Polyurethanschuhsohlen thermisch umgeformt werden können. Weiter ist ein Recyceln der hergestellten Polyurethanschuhsohlen durch Aufschmelzen und thermoplastisches Verarbeiten, beispielsweise zusammen mit thermoplastischen Polyurethan, möglich. Schließlich ist die Verwendung von Hybridmaterialien vorteilhaft. Dabei wird ein Polyurethanelement nach einem erfindungsgemäßen Verfahren mit anderen Werkstoffen, beispielsweise EVA, so kombiniert, dass eine Struktur erhalten wird, in der sich eine oder mehrere Schichten bestehend aus dem erfindungsgemäßen Polyurethan unter, über oder zwischen Schichten von anderen Werkstoffen befindet/befinden.

Im Folgenden soll die Erfindung anhand von Beispielen verdeutlicht werden.

Beispiele

Verwendete Einsatzstoffe:

Polyol 1: Polytetrahydrofuran mit einer OH-Zahl von 56 mg KOH/g

Polyol 2: Polyetherol auf Basis von Glycerin, Propylenoxid, und Ethylenoxid mit einer OH-Zahl von 27 mg KOH/g und einer Viskosität von 5270 mPas bei 25°C

Polyol 3: Polymerpolyol auf Basis von Glycerin als Starter und Propylenoxid, und Ethylenoxid mit einer OH-Zahl von 19 mg KOH/g und einem dispergierten Styrol-Acrylnitril-Feststoffanteil von ca. 45 Gew.-%

Polyol 4: Polyesterol auf Basis von Adipinsäure, Monoethylenglycol und Butandiol mit einer OH-Zahl von 56 mg KOH/g

Polyol 5: Hoopol® PM 445 der Firma Synthesia (Polymerpolyesterpolyol mit einer OH-Zahl von ca. 60

Polyol 6: Polyesterol auf Basis von Adipinsäure, Butandiol und 2-Methyl-1,3-propandiol mit einer OH-Zahl von 56 mg KOH/g

Polyol 7: Polyesterol auf Basis von Adipinsäure, Monethylenglycol und Butandiol mit einer OH-Zahl von 80 mg KOH/g

KV 1:         Monoethylenglykol
KV 2:         1,4-Butandiol
Cross 1:      Trifunktionaler Vernetzer mit einer OH-Zahl von 1160 mg KOH/g
Cross 2:      Trifunktionaler Vernetzer mit einer OH-Zahl von 1825 mg KOH/g
Cross 3:      Trifunktionaler Vernetzer mit einer OH-Zahl von 1254 mg KOH/g
Stabi 1:      Polyethermethylsiloxan der Firma Air Products
Stabi 2:      Scherstabilisator auf Basis von Polyethersiloxanen
Stabi 3:      Zellstabilisator auf Basis von Polyethersiloxanen
Stabi 4:      Zellregulator der Firma Goldschmidt
Stabi 5:      50%ige Lösung des Natriumsalzes von sulfatiertem Rizinusöl in Wasser
Stabi 6:      2,2',6,6'-Tetraisopropyldiphenylcarbodiimid
Stabi 7:      Gemisch aus Fettsäurepolyglykolestern und Aminsalzen von Alkylbenzolsulfonsäuren
Stabi 8:      Polyethermethylsiloxan
Stabi 9:      Fettsäureethoxylat
KAT 1:        Lupragen® N203 der Firma BASF Polyurethanes
KAT 2:        Bis-(2-dimethylaminoethyl)ether 70%ig gelöst in Dipropylenglykol
KAT 3:        Katalysator auf Basis von Bismuth
KAT 4:        Katalysator auf Basis von Imidazolverbindungen
KAT 5:        Delayed action Katalysator auf Basis von Triethylendiamin
KAT 6:        Katalysator auf Basis einer Mischung von 30 Gew.-% Pentamethyl-diethylentriamin und 70 Gew.-% N-Methyl-N'-(dimethylaminoethyl)-piperazin
ISO 1:        konventionelles Isocyanatprepolymer auf Basis von MDI mit einem difunktionellen Polyetherol und einem NCO-Gehalt von 14 %
ISO 2:        konventionelles Isocyanatprepolymer auf Basis von MDI mit einem difunktionellen Polyesterol und einem NCO-Gehalt von 23 %
ISO 3:        4,4'-MDI
ISO 4:        4,4'-MDI und carbodiimidmodifiziertes 4,4'-MDI
ISO 5:        Prepolymer auf Basis von ISO 3, ISO 4 und Polyol 7

Herstellung von ISO 5:

In einen 2L 4-Halskolben mit Blattrührer, Thermometer, Stickstoffeinleitung wurden 592,6g ISO 3 und 240,00g ISO 4 vorgelegt und auf 60°C erwärmt. Bei 60°C wurden unter Rühren in kleinen Portionen über einen Zeitraum von 30 Minuten insgesamt 1167,2g Polyol 7 zugegeben. Nachdem alle Komponenten zugeben wurden, wurde die Mischung auf eine Temperatur von 80°C aufgeheizt und 2 Stunden bei dieser Temperatur gerührt. Danach wurde auf Raumtemperatur gekühlt und nach 24 Stunden der NCO-Gehalt des Prepolymers bestimmt (10,2%).

Anwendungsbeispiele B1 und B4

Beispiel B1

a) Herstellung eines isocyanatgruppenhaltigen Prepolymers auf Basis 4,4'-MDI

Eine Mischung aus 1000 Gew.-Teilen von Polyol 4 und 1,8 Gew.-Teilen von Stabi 1 wurde auf 145 °C erwärmt und bei dieser Temperatur mit 394 Gew.-Teilen ISO 3 unter intensivem Rühren versetzt und zur Reaktion gebracht.
Man erhielt ein Prepolymer mit einem NCO-Gehalt von 6,13% und einer Viskosität von 1800 mPas bei 80 °C (gemessen mit einem Rotationsviskosimeter).

b) Herstellung von Polyurethanformkörpern

Härterkomponente, die bestand aus

    100 Gew.-Teilen Stabi 5
    40 Gew.-Teilen Stabi 6
    1,2 Gew.-Teilen Stabi 7
    4 Gew.-Teilen Stabi 8
    und
    0,6 Gew.-Teilen von KAT 6.

100 Gew.-Teile des auf 86 °C temperierten isocyanatgruppenhaltigen Prepolymers wurden mit 3,5 Gewichtsteilen der auf 50 °C temperierten Härterkomponente ca. 10 Sekunden lang intensiv gerührt. Die Reaktionsmischung wurde danach in ein auf 83 °C temperiertes, verschließbares, metallisches Formwerkzeug mit dem Abmaßen 21 cm x 11 cm x 3 cm eingefüllt, das Formwerkzeug verschlossen und die Reaktionsmischung aushärten gelassen. Nach 18 min wurde der mikrozelluläre Formkörper entformt und zur thermischen Nachhärtung 24 h bei 100 °C getempert.

Beispiel B4

a) Herstellung eines isocyanatgruppenhaltigen Prepolymers auf Basis 4,4'-MDI

Eine Mischung aus 1000 Gew.-Teilen von Polyol 6 und 0,3 Gew.-Teilen Cross 3 wurde auf 142 °C erwärmt und bei dieser Temperatur mit 410 Gew.-Teilen ISO 3 unter intensivem Rühren versetzt und zur Reaktion gebracht.
Man erhielt ein Prepolymer mit einem NCO-Gehalt von 6,48% und einer Viskosität von 1540 mPas bei 80 °C (gemessen mit einem Rotationsviskosimeter).

b) Herstellung von Polyurethanformkörpern

Härterkomponente, die bestand aus

100 Gew.-Teilen Stabi 5
50 Gew.-Teilen Stabi 6
1,2 Gew.-Teilen Stabi 7
4 Gew.-Teilen Stabi 8
20 Gew.-Teilen Stabi 9
und
0,3 Gew.-Teilen von KAT 6.

100 Gew.-Teile des auf 80 °C temperierten isocyanatgruppenhaltigen Prepolymers wurden mit 4,6 Gewichtsteilen der auf 52 °C temperierten Härterkomponente ca. 10 Sekunden lang intensiv gerührt. Die Reaktionsmischung wurde danach in ein auf 79 °C temperierte, verschließbares, metallisches Formwerkzeug mit dem Abmaßen 21 cm x 11 cm x 3 cm eingefüllt, das Formwerkzeug verschlossen und die Reaktionsmischung aushärten gelassen. Nach 19 min wurde der mikrozelluläre Formkörper entformt und zur thermischen Nachbehandlung 24 h bei 100 °C getempert. Die Eigenschaften der erhaltenen Polyurethanschuhsohlen sind in Tabelle 1 angegeben.

Tabelle 1

|  | B1 | B1 | B4 |
|---|---|---|---|
| Starttemperatur Prepolymerherstellung [°C] | 145 |  | 142 |
| Index | 110 |  | 105 |
| freies Raumgewicht [g/l] | 123 |  | 99 |
| Formteildichte [g/l] | 220 | 185 | 160 |
| Härte [Asker C] | 50 | 38 | 30 |
| Rückprallelastizität [%] | 48 | 47 | 26 |
| Druckverformungsrest [%] | 6 | 10 | 9,5 |
| Zugfestigkeit [N/mm$^2$] | 1,3 |  |  |
| Dehnung[%] | 257 |  |  |
| Weiterreißwiderstand [N/mm] | 2,1 |  |  |
| Speicherarbeit Ws [Nm] | 0,73 | 0,5 | 0,36 |
| Dämpfung [%] | 24 | 24 | 21 |
| Steifigkeit c [N/mm] | 171 | 45 | 28 |

Vergleichsbeispiele V1 bis V3

Die Polyolmischungen für die Vergleichsbeispiele 1-3 wurden gemäß Tabelle 2 hergestellt. Die Polyolmischungen wurden mit den entsprechenden konventionellen Isocyanatprepolymeren auf einer Niederdruckmaschine Polyurethanmaschine, Typ EMB F20 miteinander vermischt und in eine Form mit dem Abmaßen 20 cm x 20 cm x 1 cm eingetragen, so dass ein Formteil mit einer Dichte gemäß Tabelle 2 entstand. Im Falle von V3 wurde die Form mit einer Zusätzlichen Öffnung versehen, so dass die Luft besser entweichen konnte

Tabelle 2

|  | V1 | V2 | V3 |
|---|---|---|---|
| Polyol 1 | 78,696 |  |  |
| Polyol 2 |  | 59,060 |  |
| Polyol 3 | 9,644 | 28,870 |  |
| Polyol 4 |  |  | 41,403 |
| Polyol 5 |  |  | 41,403 |
| KV 1 | 8,294 | 7,040 | 11,690 |
| KV 2 |  | 2,260 |  |
| Cross 1 | 0,241 |  |  |
| Cross 2 |  |  | 0,487 |
| KAT 1 | 1,447 | 1,100 | 0,292 |
| KAT 2 | 0,289 | 0,510 |  |
| KAT 3 |  | 0,06 |  |
| KAT 4 | 0,145 |  |  |
| KAT 5 |  |  | 1,656 |
| Stabi 1 | 0,183 |  |  |
| Stabi 2 |  |  | 0,487 |
| Stabi 3 |  |  | 0,487 |
| Stabi 4 |  |  | 0,974 |
| Wasser | 1,061 | 1,100 | 1,120 |
|  |  |  |  |
| Komponenten Temperatur [°C] | 25 | 45 | 45 |
|  |  |  |  |
| Prepolymer | ISO 1 | ISO 1 | ISO 2 |
| Index | 96 | 98 | 95 |
|  |  |  |  |
| Startzeit [s] | 7 | 6 | 8 |
| Steigzeit [s] | 43 | 34 | 60 |
| Freies Raumgewicht [g/L] | 151 | 137 | 126 |
| Formteildichte [g/L] | 250 | 250 | 210 |
| Härte [Asker C] | 55 | 55 | 49 |
| Rückprallelastizität [%] | 26 | 41 | 26 |
| Druckverformungsrest [%] | 22 | 13 | 20 |

Anwendungsbeispiele B2 und B3: PU-Hybridschaum

Ebenso kann die Kombination von den erfindungsgemäßen Schäumen mit normalen Polyurethansystemen zu Produkten mit verbesserten Eigenschaften führen. Dazu wurde eine 4 mm dicke Platte des erfindungsgemäßen Schaums B1 in eine Form mit den Abmessungen 20 cm x 20 cm x 1 cm geben. Alsdann wurde die Mischung des Vergleichsbeispiels 1 auf diesen Schaum gegeben, so dass ein Formkörper mit einer Dichte von 216 g/L entstand.

|  | B1 | V1 | B2 | B3 |
|---|---|---|---|---|
| Rückprallelastizität [%] | 48 | 26 | 40 | 36 |

Die Beispiele B2 & B3 unterscheiden sich nur dadurch, dass bei der Prüfung des Materials B2 and der Prüfseite das Material B1 bzw. bei B3 das Material V1 die Oberseite bildete. Wie aus den Beispielen klar hervorgeht, ist eine Kombination der erfindungsgemäßen Formkörper mit anderen Materialien vorteilhaft.

Anwendungsbeispiel B5: Hybrid aus PU und EVA

Eine Schuhsohle wurde aus zwei Lagen hergestellt. Die eine Lage bestand aus EVA, die andere Lage bestand aus dem erfindungsgemäßen Schaum B1. Die beiden Lagen hatten die gleiche Dicke.

|  | EVA | B5 |
|---|---|---|
| Druckverformungsrest [%] | 86 | 47 |

Das Resultat ist unabhängig davon, ob die EVA-Lage bei der Prüfung oben oder unten zu liegen kommt. Auch hier zeigt sich, dass eine Kombination der erfindungsgemäßen Formkörper mit anderen Materialien vorteilhaft ist.
Anwendungsbeispiele B6 und Vergleichsbeispiel V4: Gemische aus herkömmlichen Schuhschaumkomponenten; Prepolymeren und Härtern.
V4: herkömmlich hergestelltes Prepolymer, wie es in der Herstellung von Prepolymeren für die Schuhindustrie Standard ist (ISO 5), mit einem NCO-Gehalt von 10,2%, wird mit einer Härterkomponente wie aus Anwendungsbeispiel B1 gemischt.
B6: Prepolymer entsprechend Anwendungsbeispiel B1 im Verhältnis 1:1 mit dem herkömmlichen Schuhschaumprepolymer aus Anwendungsbeispiel V4 gemischt, anschließend vermischt mit einer Härterkomponente wie aus Anwendungsbeispiel B1

|  | V4 | B6 |
|---|---|---|
| Index | 105 | 105 |
| Formteildichte [g/l] | 299 | 189 |
| Rückprallelastizität [%] | 30 | 39 |
| Druckverformungsrest [%] | 17,8 | 11,3 |
| Zugfestigkeit [N/mm$^2$] | 2,4 | 1,4 |
| Dehnung[B1] [%] | 235 | 285 |
| Speicherarbeit Ws [Nm] | 2,2 | 0,75 |
| Dämpfung [%] | 38 | 30 |
| Steifigkeit c [N/mm] | 354 | 147 |

**Patentansprüche**

1. Verfahren zur Herstellung von Polyurethanschuhsohlen mit einer Formteildichte von 100 bis 350 g/L, bei dem man

    a) organische Polyisocyanate,
    b) Polyole,

c) Treibmittel, enthaltend Wasser und gegebenenfalls
d) Kettenverlängerungsmittel und/oder Vernetzungsmittel,
e) Katalysatoren und
f) sonstigen Hilfsmittel und/oder Zusatzstoffe,
einsetzt,
wobei man in einem ersten Schritt Polyisocyanat (a), Polyol (b) und gegebenenfalls Kettenverlängerungs- und/oder Vernetzungsmittel (d) mischt und bei einer Temperatur von 110 °C bis 180 °C zu einem Polyisocyanatgruppen aufweisenden Prepolymer umsetzt, und in einem zweiten Schritt das erhaltene isocyanatterminierte Prepolymer und gegebenenfalls verbleibendem Polyisocyanat (a) mit Treibmittel, enthaltend Wasser (c), gegebenenfalls verbleibendem Polyol (b) und gegebenenfalls verbleibendem Kettenverlängerungsmitteln und/oder Vernetzungsmittel (d) sowie gegebenenfalls vorhandenen Katalysatoren (e) und sonstigen Hilfsmitteln und/oder Zusatzstoffen (f) vermischt, in eine Form gibt und zu einer Polyurethanschuhsohle ausreagieren lässt.

2. Verfahren zur Herstellung von Polyurethanschuhsohlen, bei dem man

a) organische Polyisocyanate,
b) Polyole,
c) Treibmittel, enthaltend Wasser und gegebenenfalls
d) Kettenverlängerungsmittel und/oder Vernetzungsmittel,
e) Katalysatoren und
f) sonstigen Hilfsmittel und/oder Zusatzstoffe,
einsetzt,
wobei man in einem ersten Schritt Polyisocyanat (a), Polyol (b) und gegebenenfalls Kettenverlängerungs- und/oder Vernetzungsmittel (d) mischt und bei einer Temperatur von 110 °C bis 180 °C zu einem Polyisocyanatgruppen aufweisenden Prepolymer umsetzt, und in einem zweiten Schritt das erhaltene isocyanatterminierte Prepolymer und gegebenenfalls verbleibendem Polyisocyanat (a) mit Treibmittel, enthaltend Wasser (c), gegebenenfalls verbleibendem Polyol (b) und gegebenenfalls verbleibendem Kettenverlängerungsmitteln und/oder Vernetzungsmittel (d) sowie gegebenenfalls vorhandenen Katalysatoren (e) und sonstigen Hilfsmitteln und/oder Zusatzstoffen (f) vermischt, zu einem Polyurethanschaumstoff mit einer Dichte von 100 bis 350 g/L, ausreagieren lässt und aus dem Polyurethanschaumstoff eine Polyurethanschuhsohle formt.

3. Verfahren nach Anspruch 1 oder 2, **dadurch gekennzeichnet, dass** das Isocyanatgruppen aufweisende Prepolymer einen Gehalt an NCO-Gruppen von 2 bis 20 Gew.-% aufweist.

4. Verfahren nach einem der Ansprüche 1 bis 3, **dadurch gekennzeichnet, dass** der Isocyanatindex im zweiten Schritt 80 bis 150 beträgt.

5. Verfahren nach einem der Ansprüche 1 bis 4, **dadurch gekennzeichnet, dass** mindestens 80 Gew.-% des Polyols (b) im ersten Schritt zum Isocyanatgruppen enthaltenden Prepolymer umgesetzt werden.

6. Verfahren nach einem der Ansprüche 1 bis 5, **dadurch gekennzeichnet, dass** mindestens 95 Gew.-% des Polyisocyanats (a) im ersten Schritt zum Isocyanatgruppen enthaltenden Prepolymer umgesetzt werden.

7. Verfahren nach einem der Ansprüche 1 bis 6, **dadurch gekennzeichnet, dass** mindestens 80 Gew.-% des Kettenverlängerungsmittels und/oder Vernetzungsmittels (d) zum Isocyanatgruppen enthaltenden Prepolymer gegeben werden.

8. Verfahren nach einem der Ansprüche 1 bis 7, **dadurch gekennzeichnet, dass** als Polyol (b) ein Polyesterpolyol mit einer mittleren Funktionalität von 1,9 bis 2,2 und einem zahlenmittleren Molekulargewicht von 800 bis 3000 g/mol eingesetzt wird.

9. Polyurethanschuhsohle, erhältlich nach einem der Ansprüche 1 bis 8.

10. Polyurethanschuhsohle nach Anspruch 9, **dadurch gekennzeichnet, dass** die Schuhsohle eine Einlegesohle ist.

**Claims**

1. A process for producing a polyurethane shoe sole having an article density of 100 to 350 g/L, which comprises utilizing

   a) an organic polyisocyanate,
   b) a polyol,
   c) a blowing agent comprising water, and optionally
   d) a crosslinking and/or chain-extending agent,
   e) a catalyst, and
   f) other auxiliaries and/or additives,
   where a first step comprises polyisocyanate (a), polyol (b) and any crosslinking and/or chain-extending agent (d) being mixed and reacted at a temperature of 110°C to 180°C to give a prepolymer having polyisocyanate groups and a second step comprises the isocyanate-terminated prepolymer obtained and any remaining polyisocyanate (a) being mixed with blowing agent comprising water (c), any remaining polyol (b) and any remaining crosslinking and/or chain-extending agent (d) and also any catalyst (e) and other auxiliaries and/or additives (f), being introduced into a mold and allowed to fully react to give a polyurethane shoe sole.

2. A process for producing a polyurethane shoe sole which comprises utilizing

   a) an organic polyisocyanate,
   b) a polyol,
   c) a blowing agent comprising water, and optionally
   d) a crosslinking and/or chain-extending agent,
   e) a catalyst, and
   f) other auxiliaries and/or additives,
   where a first step comprises polyisocyanate (a), polyol (b) and any crosslinking and/or chain-extending agent (d) being mixed and reacted at a temperature of 110°C to 180°C to give a prepolymer having polyisocyanate groups and a second step comprises the isocyanate-terminated prepolymer obtained and any remaining polyisocyanate (a) being mixed with blowing agent comprising water (c), any remaining polyol (b) and any remaining crosslinking and/or chain-extending agent (d) and also any catalyst (e) and other auxiliaries and/or additives (f), being allowed to fully react to form a polyurethane foam having a density of 100 to 350 g/L and a polyurethane shoe sole being shaped out of the polyurethane foam.

3. The process according to claim 1 or 2, wherein the isocyanate-functional prepolymer has an NCO group content of 2 to 20 wt%.

4. The process according to any of claims 1 to 3, wherein the isocyanate index in the second step is from 80 to 150.

5. The process according to any of claims 1 to 4, wherein not less than 80 wt% of said polyol (b) is converted in the first step into the prepolymer comprising isocyanate groups.

6. The process according to any of claims 1 to 5, wherein not less than 95 wt% of said polyisocyanate (a) is converted in the first step into the prepolymer comprising isocyanate groups.

7. The process according to any of claims 1 to 6, wherein not less than 80 wt% of said crosslinking and/or chain-extending agent (d) is added to the prepolymer comprising isocyanate groups.

8. The process according to any of claims 1 to 7, wherein said polyol (b) comprises a polyester polyol having an average functionality of 1.9 to 2.2 and a number-average molecular weight of 800 to 3000 g/mol.

9. A polyurethane shoe sole obtainable according to any one of claims 1 to 8.

10. The polyurethane shoe sole according to claim 9, which is an insert sole.

**Revendications**

1. Procédé de fabrication de semelles de chaussures en polyuréthane d'une densité de pièce moulée de 100 à 350 g/l, selon lequel

a) des polyisocyanates organiques,
b) des polyols,
c) des agents gonflants, contenant de l'eau, et éventuellement
d) des agents d'allongement de chaînes et/ou des agents de réticulation,
e) des catalyseurs et
f) d'autres adjuvants et/ou additifs sont utilisés,
lors d'une première étape, le polyisocyanate (a), le polyol (b) et éventuellement les agents d'allongement de chaînes et/ou les agents de réticulation (d) étant mélangés et mis en réaction à une température de 110 °C à 180 °C pour former un prépolymère comprenant des groupes polyisocyanate et, lors d'une seconde étape, le prépolymère à terminaison isocyanate obtenu et éventuellement le polyisocyanate (a) restant étant mélangé avec des agents gonflants, contenant de l'eau (c), éventuellement le polyol (b) restant et éventuellement les agents d'allongement de chaînes et/ou les agents de réticulation (d) restants, ainsi qu'éventuellement des catalyseurs (e) présents et d'autres adjuvants et/ou additifs (f), introduits dans un moule et laissés réagir pour former une semelle de chaussure en polyuréthane.

2. Procédé de fabrication de semelles de chaussures en polyuréthane, selon lequel

a) des polyisocyanates organiques,
b) des polyols,
c) des agents gonflants, contenant de l'eau, et éventuellement
d) des agents d'allongement de chaînes et/ou des agents de réticulation,
e) des catalyseurs et
f) d'autres adjuvants et/ou additifs sont utilisés,
lors d'une première étape, le polyisocyanate (a), le polyol (b) et éventuellement les agents d'allongement de chaînes et/ou les agents de réticulation (d) étant mélangés et mis en réaction à une température de 110 °C à 180 °C pour former un prépolymère comprenant des groupes polyisocyanate et, lors d'une seconde étape, le prépolymère à terminaison isocyanate obtenu et éventuellement le polyisocyanate (a) restant étant mélangés avec des agents gonflants, contenant de l'eau (c), éventuellement le polyol (b) restant et éventuellement les agents d'allongement de chaînes et/ou les agents de réticulation (d) restants, ainsi qu'éventuellement des catalyseurs (e) présents et d'autres adjuvants et/ou additifs (f), laissés réagir pour former une mousse en polyuréthane d'une densité de 100 à 350 g/l, et une semelle de chaussure en polyuréthane étant formée à partir de la mousse en polyuréthane.

3. Procédé selon la revendication 1 ou 2, **caractérisé en ce que** le prépolymère comprenant des groupes isocyanate présente une teneur en groupes NCO de 2 à 20 % en poids.

4. Procédé selon l'une quelconque des revendications 1 à 3, **caractérisé en ce que** l'indice d'isocyanate lors de la seconde étape est de 80 à 150.

5. Procédé selon l'une quelconque des revendications 1 à 4, **caractérisé en ce qu'**au moins 80 % en poids du polyol (b) est transformé lors de la première étape en le prépolymère contenant des groupes isocyanate.

6. Procédé selon l'une quelconque des revendications 1 à 5, **caractérisé en ce qu'**au moins 95 % en poids du polyisocyanate (a) est transformé lors de la première étape en le prépolymère contenant des groupes isocyanate.

7. Procédé selon l'une quelconque des revendications 1 à 6, **caractérisé en ce qu'**au moins 80 % en poids de l'agent d'allongement de chaînes et/ou de l'agent de réticulation (d) est ajouté au prépolymère contenant des groupes isocyanate.

8. Procédé selon l'une quelconque des revendications 1 à 7, **caractérisé en ce qu'**un polyester-polyol ayant une fonctionnalité moyenne de 1,9 à 2,2 et un poids moléculaire moyen en nombre de 800 à 3 000 g/mol est utilisé en tant que polyol (b).

9. Semelle de chaussure en polyuréthane, pouvant être obtenue selon l'une quelconque des revendications 1 à 8.

10. Semelle de chaussure en polyuréthane selon la revendication 9, **caractérisée en ce que** la semelle de chaussure est une semelle intérieure.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1756187 A
- EP 1042384 A
- EP 1225199 A
- US 20050101682 A1
- WO 05098763 A
- EP 250351 A
- DE 111394
- US 3304273 A
- US 3383351 A
- US 3523093 A
- DE 1152536
- DE 1152537
- US 3615972 A
- EP 153639 A
- DE 3607447 A
- US 4764537 A

**In der Beschreibung aufgeführte Nicht-Patentliteratur**

- **VON PIECHOTA ; RÖHR.** Integraischaumstoff. Carl-Hanser-Verlag, 1975
- Kunststoffhandbuch. Polyurethane. 1993, vol. 7, 3